# EUROPÄISCHE PATENTANMELDUNG

(11) **EP 1 022 519 A1**
(43) Veröffentlichungstag der Anmeldung: **26.07.2000**
(21) Anmeldenummer: 99101285.7
(22) Anmeldetag: 25.01.1999
(51) Int. Cl.: F24F 5/00, F24D 3/12

(54) **Verfahren zur Kühlung eines Raumes und Vorrichtung zur Durchführung des Verfahrens**

(71) Anmelder: Luk Klaus Roschmann, 8003 Zürich (CH)
(72) Erfinder: Roschmann, Klaus, 8730 Uznach (CH)
(74) Vertreter: Wagner, Wolfgang, Dr. Phil., Dipl.-Phys.

(57) **Zusammenfassung**

Zur Regelung der Kühlwirkung einer während einer zwischen zwei Gebrauchsphasen liegenden Zwischenphase vorgekühlten Decke auf einen unter derselben liegenden Raum ist unterhalb der Decke eine einstellbare Abschirmvorrichtung (6) angebracht, mittels welcher der Wärmeübergang zwischen dem Raum und der Decke geregelt werden kann. Sie umfasst Platten (15, 15') aus wärmeisolierendem Material wie Mineralfaser, welche mittels Kabeln, die über z. T. von Servomotoren (19) antreibbare Rollen (18a,b) laufen, übereinandergeschoben werden können, so dass die wirksame Fläche der Abschirmvorrichtung (6) an den Kühlungsbedarf angepasst werden kann.

## Beschreibung

### Technisches Gebiet

Die Erfindung betrifft ein Verfahren zur Kühlung eines Raumes gemäss dem Oberbegriff des Anspruchs 1 sowie eine Vorrichtung zur Durchführung des Verfahrens gemäss dem Oberbegriff des Anspruchs 4.

### Stand der Technik

Ein gattungsgemässes Verfahren sowie eine entsprechende Vorrichtung sind z. B. aus der EP-A-0 637 721 bekannt. Dort wird die Decke des zu kühlenden Raumes durch eine unterhalb derselben angeordnete Kühldecke, welche auch der direkten Raumkühlung während der Gebrauchsphasen dient, während der Zwischenphasen jeweils auf eine möglichst tiefe Temperatur vorgekühlt.

Aehnliche Lösungen sind in verschiedenen Firmenbroschüren beschrieben, z. B. in 'Die thermoaktive Decke' der Firma Amstein + Walthert, wo die Decke in den Zwischenphasen mittels eingegossener Stahlrohre gekühlt wird, in 'Innovation 5' der TA-Media AG und in 'Kühlen und heizen mit thermoaktivem Bauteilsystem, Messe Zürich' der G&P Grünberg & Partner AG.

In jedem der beschriebenen Fälle wird die thermische Trägheit des Deckenmaterials, in der Regel Beton, dazu benützt, mit geringem Energieaufwand die während der Gebrauchsphase gewöhnlich herrschenden hohen Tagestemperaturen zu dämpfen, indem die Decke während der Nacht unter Ausnützung der tieferen Nachttemperaturen gekühlt wird.

Dabei tritt jedoch das Problem auf, dass die Temperatur der Decke während der Gebrauchsphase zunimmt und daher ihre Kühlwirkung entweder gegen Ende derselben nicht ausreicht oder zu Anfang derselben zu stark ist. In der Regel kann die Vorkühlung der Decke nicht im prinzipiell möglichen Umfang ausgenützt werden kann, da sonst die Temperaturen zu Beginn der Gebrauchsphase zu tief sind, wenn nicht, wie in der EP-A-0 637 721 beschrieben, zum Einsatz einer Zusatzheizung Zuflucht genommen werden soll, was mit verschiedenen Nachteilen - Energieverbrauch, zusätzliche Installationen - verbunden ist. Zur Vermeidung grösserer Abweichungen der Raumtemperatur von der Solltemperatur muss dann jeweils über die blossen Lüftungsbedürfnisse hinaus geheizte oder gekühlte Zuluft zugeführt werden, was ebenfalls einen hohen Energieverbrauch verursacht und auch stärkere Luftströmungen verursachen kann als mit optimalem Komfort verträglich ist.

Ebenfalls ungünstig ist es bei den bisher bekannten Arten der Raumkühlung durch eine vorgekühlte Decke, dass die Kühlleistung nicht an die Wärmebelastung des Raums anpassbar ist. Diese kann je nach der Anzahl von Personen, laufenden Geräten etc. sehr unterschiedlich sein und von Raum zu Raum stark variieren und ist auch oft nicht vorhersehbar. Die Vorkühlung muss daher auf eine mittlere Wärmebelastung eingestellt werden. Die Einstellung auf die tatsächliche Belastung ist wieder nur mit hohem Energieverbrauch z. B. durch Zufuhr geheizter oder gekühlter Zuluft möglich.

### Darstellung der Erfindung

Der Erfindung liegt die Aufgabe zu Grunde, ein gattungsgemässes Verfahren anzugeben, mit welchem das Prinzip der Vorkühlung der Decke des zu kühlenden Raums besser ausgenützt und flexibler eingesetzt werden kann sowie eine zur Durchführung des Verfahrens geeignete Vorrichtung. Diese Aufgaben werden durch die Merkmale im Kennzeichen des Anspruchs 1 bzw. des Anspruchs 4 gelöst.

Bei Verwendung des erfindungsgemässen Verfahrens kann die Decke sehr stark vorgekühlt werden, da das Ausmass, in dem sich ihre Temperatur auf diejenige des Raums auswirkt, regelbar ist. Die Vorkühlung kann also gewöhnlich so angelegt werden, dass sie für die gesamte Gebrauchsphase ausreicht und eine Zusatzkühlung auch gegen Ende derselben nicht erforderlich ist, da auch bei tiefer Deckentemperatur zu Beginn der Gebrauchsphase eine Unterkühlung des Raumes durch eine Reduktion des Wärmeübergangs zwischen Decke und Raum vermieden wird.

Ausserdem kann die Kühlwirkung auf entsprechende Weise an die jeweilige Wärmebelastung des Raumes angepasst werden, indem die Vorkühlung der Decke auf die maximale zu erwartende Wärmebelastung eingestellt und die Kühlwirkung erforderlichenfalls durch Reduktion des Wärmeübergangs an die tatsächliche Belastung angepasst wird. Ausgleichende zusätzliche Heiz- oder Kühlmassnahmen sind daher in der Regel nicht erforderlich, was den Energiebedarf wesentlich verringert. Auch können die Anlagen gewöhnlich einfacher oder kleiner dimensioniert sein, so dass auch diesbezüglich eine Reduktion des Aufwandes und der Kosten erzielt wird.

### Kurze Beschreibung der Zeichnungen

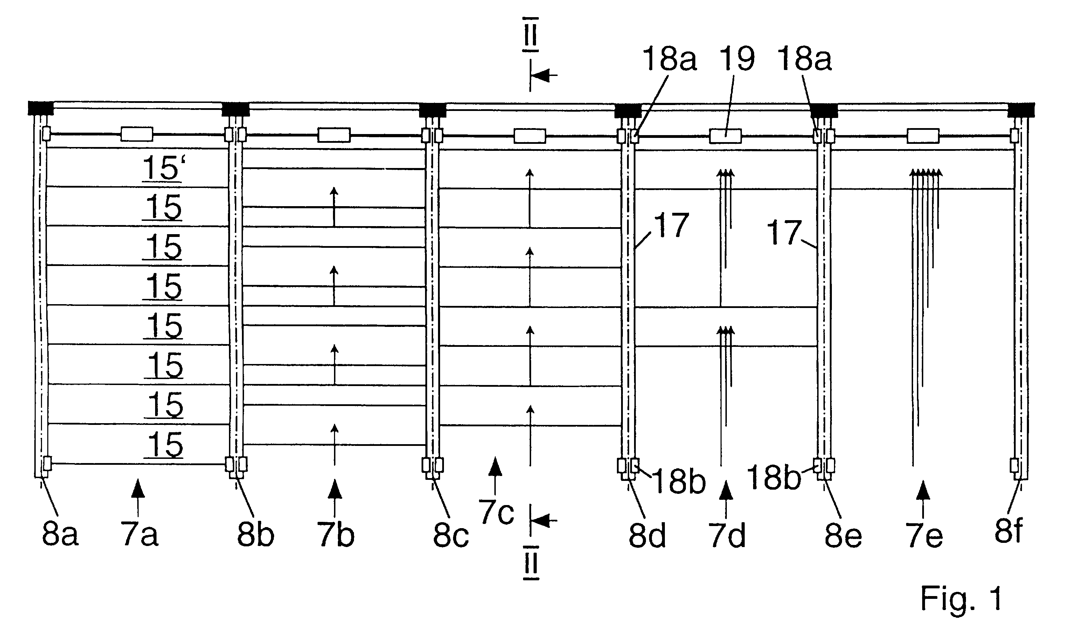

Im folgenden wird die Erfindung anhand von Figuren, welche lediglich ein Ausführungsbeispiel darstellen, näher erläutert. Es zeigen
- Fig. 1: eine Draufsicht auf eine Abschirmvorrichtung einer erfindungsgemässen Vorrichtung und
- Fig. 2: einen Schnitt längs II-II in Fig. 1.

### Wege zur Ausführung der Erfindung

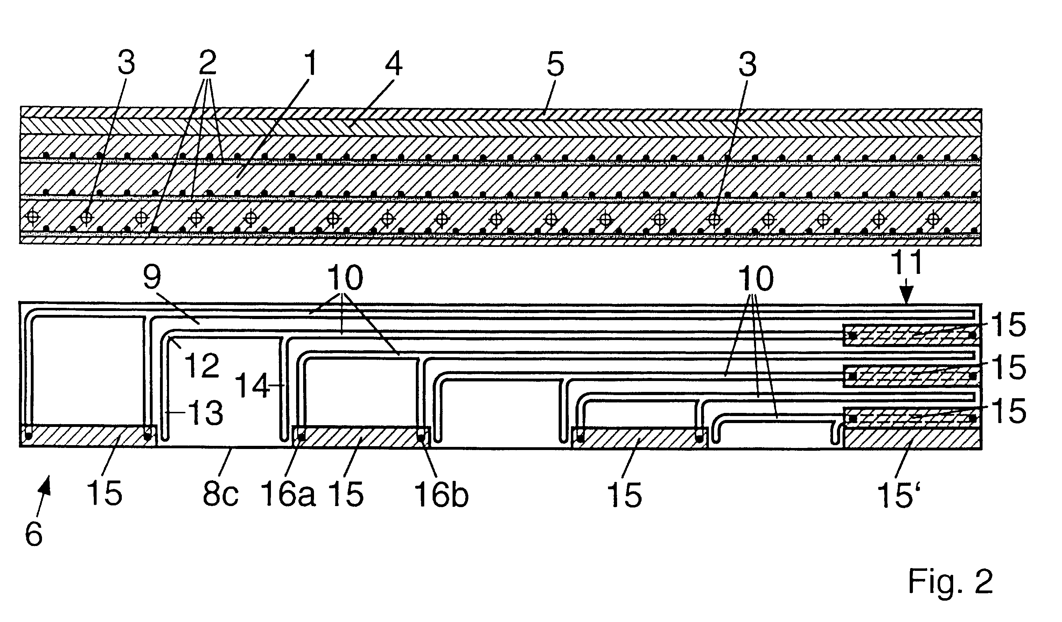

Eine Decke 1 (Fig. 2) eines Raumes, die z. B. vorzugsweise im wesentlichen aus Beton besteht und mit Armierungen 2 versehen ist, enthält in der Nähe ihrer Unterseite auf gleicher Höhe in regelmässigen Abständen nebeneinander angeordnete parallele Rohre 3, durch welche ein Wärmeübertragungsmedium, vorzugsweise eine Flüssigkeit wie z. B. Wasser oder Sole geleitet werden kann. An der Oberseite der Decke 1 ist ein Unterlagsboden 4 angebracht. Auf demselben liegt ein durchgehender Bodenbelag 5 aus einem Material mit geringer Wärmeleitfähigkeit, der eine Isolationsschicht bildet.

Mit geringem Abstand unterhalb der Decke 1 ist eine Abschirmvorrichtung 6 angebracht, die aus mehreren nebeneinander angeordneten Bahnen 7a,b,c,d,e besteht, welche jeweils von senkrechten Wänden 8a,b,c,d,e,f begrenzt werden. Die Wände 8a,b,c,d,e,f sind jeweils an der Decke 1 aufgehängt. Die am Rand liegenden Wände 8a, 8f können allerdings auch jeweils an einer Seitenwand des Raumes befestigt sein. Die Wände 8a,b,c,d,e,f wenden den Bahnen 7a,b,c,d,e jeweils Kulissenflächen 9 zu, in welche jeweils mehrere Führungsnuten 10 eingesenkt sind, die, vertikal in festen Abständen aufeinanderfolgend übereinander jeweils waagrecht von einer an eine Seitenwand des Raumens anschliessenden Stapelstelle 11 bis zu einer Umbiegung 12 geführt sind, wo sie in einen nach unten weisenden Endabschnitt 13 übergehen, der bis nahe an den unteren Rand der jeweiligen Zwischenwand läuft, während in einem bei allen Führungsnuten 10 gleichen Abstand vor der Umbiegung 12 ein Zweig 14 nach unten abgeht, der parallel zum Endabschnitt 13 und ebenso weit wie dieser nach unten geführt ist.

Jedem Paar einander gegenüberliegender Führungsnuten 10 ist eine Platte 15 aus thermisch isolierendem Material zugeordnet, vorzugsweise einer Mineralfaserplatte mit an ihrer Unterseite einer Lochplatte aus Hartmaterial, insbesondere Metall oder Kunststoff. Jede der Platten 15 weist an ihren den Kulissenflächen 9 zugewandten Rändern jeweils zwei auf gleicher Höhe angeordnete vordere bzw. hintere Führungsbolzen 16a; 16b auf, deren Abstand dem zwischen dem Endabschnitt 13 und dem Zweig 14 entspricht. Sie greifen beidseits in die jeweilige Führungsnut 10 ein, so dass jede der Platten 15 sich nur längs derselben bewegen kann. An der Stapelstelle 11 ist jeweils eine Platte 15' fest montiert.

Jede Platte 15 ist ausserdem mit zwei den Führungsnuten 10 entlanggeführten Kabeln oder Bändern 17 eines Seilzugs verbunden, deren jedes über Rollen 18a,b läuft, von denen jeweils die Rolle 18a durch einen Servomotor 19 antreibbar ist. Durch den Seilzug kann jede Platte 15 zwischen einer Stapelposition an der Stapelstelle 11 und einer Einsatzposition, in welcher sich die Führungsbolzen 16a,b an den Enden des Endabschnitts 13 bzw. der Zweignut 14 der Führungsnut 10 befinden, verschoben werden, wobei sie auch in beliebigen Zwischenstellungen verbleiben kann.

Die Decke 1 kann nun während einer Zwischenphase zwischen zwei Gebrauchsphasen durch Durchleitung von z. B. kaltem Wasser durch die Rohre 3 gekühlt werden. Da die Zwischenphasen gewöhnlich in die Nacht fallen, während die Gebrauchsphasen meist mehr oder weniger den üblichen Arbeitszeiten entsprechen und in die Tageszeit fallen, können dabei die während der Nacht tieferen Temperaturen benützt und die Decke 1 stark abgekühlt werden. Auf den darüberliegenden Raum wirkt sich dies wegen der Isolationswirkung des Bodenbelags 5 nur wenig aus.

Wird nun etwa am Morgen, wenn die Decke 1 auf eine weit unter der Solltemperatur des Raumes liegende Anfangstemperatur abgekühlt ist, der Raum wenig benützt, so dass die Wärmebelastung gering ist, so ist die Kühlwirkung der blossen Decke bei weitem zu gross. Daher befinden sich die Platten 15 in einer anhand der Bahn 7a dargestellten Grundstellung, in der sie alle ihre jeweiligen Einsatzpositionen einnehmen. Nebeneinanderliegende Platten 15 schliessen dabei unmittelbar aneinander an, so dass ihre Unterseiten eine geschlossene ebene Fläche bilden. Die wirksame Fläche der Abschirmvorrichtung 6 ist maximal, ihre Wärmedurchlässigkeit daher minimal und der Wärmeübergang zwischen der Decke 1 und dem Raum entsprechend gering, so dass sich die tiefe Temperatur der Decke 1 kaum auf die Raumtemperatur auswirkt.

Bei steigender Raumtemperatur kann nun z. B., wie an der Bahn 7b dargestellt, jede zweite Platte 15 mittels des Servomotors 19 um die Hälfte ihrer Breite über die jeweils benachbarte Platte 15 geschoben werden, die in ihrer Einsatzposition verbleibt. Die wirksame Fläche der Abschirmvorrichtung 6, die etwa der vertikalen Projektion der Platten auf die Unterseite der Decke 1 entspricht, beträgt nun 75% der Fläche der letzteren, während 25% der Unterseite der Decke 1 frei bleiben. Es ist daher etwas direkter Wärmeaustausch durch Strahlung und Konvektion zwischen der Unterseite der Decke 1 und dem Raum möglich. Die Kühlwirkung der Decke 1 ist allerdings immer noch stark gedämpft.

In der Bahn 7c ist dann jede zweite der Platten 15 mit der in der Einsatzposition verbleibenden benachbarten Platte voll zur Deckung gebracht, so dass die Decke 1 nun nur noch zu 50% abgeschirmt ist. Der Wärmeübergang ist nun deutlich höher, so dass die Decke 1 eine stärkere Kühlwirkung entfalten kann. In der benachbarten Bahn 7d ist ein Fall dargestellt, in welchem jeweils vier der Platten 15 zur Deckung gebracht sind, so dass sie insgesamt nur 25% der Fläche der Deckenunterseite abschirmen, während am Beispiel der Bahn 7e gezeigt ist, wie sämtliche Platten 15 in die Stapelstelle 11 verschoben sind, so dass die Decke 1 nun im übrigen vollständig frei ist und ihre Kühlwirkung praktisch voll entfalten kann. Diese Stellung kann gegen das Ende der Gebrauchsphase, wenn sich die Decke 1 bereits merklich erwärmt hat und gleichzeitig der Raum einer grossen Wärmebelastung ausgesetzt ist, eingenommen werden.

Die Wahl der Stellung der Platten 15 kann automatisch, etwa aufgrund von Temperaturmessungen erfolgen oder auch direkt durch die Benutzer des Raumes. Dabei ist es natürlich auch möglich, lokal unterschiedliche Bedürfnisse oder Wärmebelastungen zu berücksichtigen, da insbesondere der Strahlungsanteil des Wärmeübergangs zwischen der Decke 1 und dem Raum sehr gut lokal eingestellt werden kann.

Es gibt natürlich verschiedene Möglichkeiten, die beschriebene Abschirmvorrichtung abzuwandeln, ohne dass damit der Grundgedanke der Erfindung, nämlich die Regelung des Wärmeübergangs zwischen der Decke und dem darunterliegenden Raum, verlassen würde. Insbesondere ist es möglich, die Platten statt verschiebbar um eine horizontale Achse kippbar zu montieren. Auch dies ermöglicht eine Verstellung der Vertikalprojektion der Abschirmvorrichtung auf die Unterseite der Decke über einen breiten Variationsbereich und damit der Abschirmwirkung und des Wärmeübergangs. Insbesondere bei kippbaren Platten ist es von Vorteil, unterhalb derselben eine durchgehende Abdeckung aus Lochplatten aus Metall oder Kunststoff, vorzugsweise mit hohem Lochanteil - z. B. 65%, anzubringen.

Die thermische Isolation der Oberseite der Decke 1 ist auch auf andere Weise möglich als dargestellt. So kann z. B. ein Doppelboden vorgesehen sein oder Kammern in der Decke 1, die mit geeignetem wärmeisolierendem Material gefüllt sind.

Schliesslich kann das geschilderte Prinzip statt für Kühlauch für Heizzwecke eingesetzt werden.

### Bezugszeichenliste

- 1: Decke
- 2: Armierung
- 3: Rohre
- 4: Unterlagsboden
- 5: Bodenbelag
- 6: Abschirmvorrichtung
- 7a,b,c,d,e: Bahnen
- 8a,b,c,d,e,f: Wände
- 9: Kulissenfläche
- 10: Führungsnut
- 11: Stapelstelle
- 12: Umbiegung
- 13: Endabschnitt
- 14: Zweig
- 15, 15': Platte
- 16a,b: Führungsbolzen
- 17: Kabel
- 18a,b: Rolle
- 19: Servomotor

## Patentansprüche

1. Verfahren zur Kühlung eines Raumes derart, dass während Gebrauchsphasen in demselben eine Solltemperatur mindestens annähernd eingehalten wird und während zwischen aufeinanderfolgenden Gebrauchsphasen liegender Zwischenphasen die Decke (1) des Raumes auf eine Anfangstemperatur abgekühlt wird, welche unter der Solltemperatur liegt, **dadurch gekennzeichnet, dass** während der Gebrauchsphasen jeweils zur genaueren Angleichung der Raumtemperatur an die Solltemperatur der Wärmeübergang zwischen der Decke (1) und dem Raum geregelt wird.

2. Verfahren nach Anspruch 1, **dadurch gekennzeichnet, dass** die Regelung des Wärmeübergangs durch Einstellen der Wärmedurchlässigkeit einer unterhalb der Decke angebrachten Abschirmung erfolgt.

3. Verfahren nach Anspruch 2, **dadurch gekennzeichnet, dass** die Wärmedurchlässigkeit der Abschirmung durch Veränderung der wirksamen Fläche derselben eingestellt wird.

4. Vorrichtung zur Durchführung des Verfahrens nach einem der Ansprüche 1 bis 3, mit einer kühlbaren Decke, **dadurch gekennzeichnet, dass** unterhalb der Decke eine Abschirmvorrichtung (6) mit verstellbarer Wärmedurchlässigkeit angeordnet ist.

5. Vorrichtung nach Anspruch 1, **dadurch gekennzeichnet, dass** die Abschirmvorrichtung (6) eine Anordnung von Platten (15, 15') aus thermisch isolierendem Material umfasst, deren räumliche Lagen zur Veränderung der Fläche der Vertikalprojektion der Anordnung auf die Unterseite der Decke (1) mindestens zum Teil verstellbar sind.

6. Vorrichtung nach Anspruch 5, **dadurch gekennzeichnet, dass** die Platten (15, 15') mindestens zum Teil horizontal übereinanderschiebbar sind.

7. Vorrichtung nach Anspruch 5 oder 6, **dadurch gekennzeichnet, dass** die Platten mindestens zum Teil kippbar sind.

8. Vorrichtung nach einem der Ansprüche 5 bis 7, **dadurch gekennzeichnet, dass** die Platten (15, 15') im wesentlichen aus Mineralfaser bestehen.

9. Vorrichtung nach einem der Ansprüche 5 bis 8, **dadurch gekennzeichnet, dass** die Platten (15, 15') an der Unterseite jeweils eine Lochplatte aus Hartmaterial, insbesondere Metall aufweisen.

10. Vorrichtung nach einem der Ansprüche 5 bis 9, **dadurch gekennzeichnet, dass** die Unterseiten der Platten (15, 15') in einer Grundstellung eine geschlossene ebene Fläche bilden.

11. Vorrichtung nach einem der Ansprüche 5 bis 10, **dadurch gekennzeichnet, dass** die Abschirmvorrichtung eine mit Abstand unterhalb der Platten durchgehende ebene Abdeckung aus Lochplatten umfasst.

12. Vorrichtung nach einem der Ansprüche 4 bis 10, **dadurch gekennzeichnet, dass** in die Decke (1) zur Leitung von Kühlfluid geeignete Rohre (3) eingelassen sind.

13. Vorrichtung nach Anspruch 12, **dadurch gekennzeichnet, dass** die Decke (1) eine oberhalb der Rohre (3) angeordnete Isolationsschicht aufweist.
